# EUROPEAN PATENT APPLICATION

(11) **EP 3 753 659 A1**
(43) Date of publication of application: **23.12.2020**
(21) Application number: 20166282.2
(22) Date of filing: 27.03.2020
(51) Int. Cl.: B23D 59/00, B25F 5/00, B27B 15/00

(54) **PORTABLE MACHINE HEALTH MONITORING SYSTEM**

(30) Priority: 31.05.2019 US 201962855188 P; 25.12.2019 TW 108147495
(71) Applicant: Cosen Mechatronics Co., Ltd., Hsinchu City 300, Taiwan, R.O.C. (TW)
(72) Inventor: HUANG, MU-SHUI, Hsinchu City (TW); WU, YING-FAN, Hsinchu City (TW); LI, HSUEH-JU, Hsinchu City (TW); CHUNG, HSIAO-YEN, Hsinchu City (TW); CHEN, LIANG-YU, Hsinchu City (TW)
(74) Representative: Lermer, Christoph

(57) **Abstract**

A portable machine health monitoring system (1), applied for diagnosing a machine (100) in operation, includes an installation device (3) and a portable monitoring box (2). The installation device (3) includes a plurality of sensing assemblies (31) and a plurality of connecting assemblies (32). Each of the plurality of sensing assemblies (31) is connected with the corresponding connecting assembly (32). Each of the plurality of connecting assemblies (32) mounts the corresponding sensing assembly (31) in a nondestructive manner onto a detected position (P) on the machine (100). Each of the plurality of sensing assemblies (31) is used for detecting a motion signal (S) at the corresponding detected position (P) on the machine (100) in operation. The portable monitoring box (2), connected with the installation device (3), includes an analysis module (21) for receiving the motion signal (S) and further for calculating a health status information according to the detected motion signal (S).

## Description

### TECHNICAL FIELD

The present disclosure relates in general to a portable machine health monitoring system.

### BACKGROUND

Generally speaking, a machine tool is a mechanical apparatus that can be driven to perform specific precision metal cutting for producing metallic parts for other machines or further machining. Thus, the machine tool is an indispensable tool in various industrial applications.

For example, the band sawing machine, as one of popular machine tools, has been developed into an important tool for high precision and high tech productions. While a typical band sawing machine is at work, with the increase in cutting loads and jobs, wear and abrasion at the saw band would be inevitable. Hence, frequent replacement of the saw bend is necessary so as able to operate the band sawing machine normally. Conventionally, maintenance personals in the production line can only judge the state of the saw band for replacement according to his/her own experience. However, the aforesaid means for judging a replacement is highly up to human judgement, not to objective data, and thus less accurate. Namely, in the art, the practical health status of the saw band cannot be precisely grasped. In particular, in the case that the replacement cannot be carried out in time, the saw band in the production line might have worn too much to perform normal cutting, and thus continuous cutting would lead to further abrasion at the saw band, waste of material caused by ill cutting, and severely interruption in production. Quietly possibly, other parts of the band sawing machine may be affected. In other words, all the aforesaid concerns in the production line are mostly caused by the inaccurate human judgement at the practical health status of the band sawing machine.

Recently, a health diagnosis machine for investigating the band sawing machine is introduced. However, since the size of this diagnosis machine is comparatively larger, thus it is inconvenient to move, needs to occupy a substantial space in the factory, and needs additional labor and time for every movement. Thus, it is not convenient for a maintenance staff to carry the health diagnosis machine all the way to the site having the band sawing machine at each service presentation. In addition, in order to detect versatile signals during operations of the band sawing machine, specific mounting parts that may damage the band sawing machine are required for mounting detection assemblies to transmit detected signals to the health diagnosis machine via connection cables. In particular, mounting work of the aforesaid specific destructive mounting parts need additional labor time and special training to complete the mounting at the band sawing machine, and such mounting work is extremely easy to damage the band sawing machine.

Thus, an improvement for providing a portable machine health monitoring system to resolve the aforesaid shortcomings is definitely urgent and welcome to the skilled persons in the art.

### SUMMARY

An object of the present disclosure is to provide a portable machine health monitoring system that can be conveniently moved for detecting any specific machine inside any factory, from which labor and time for locating the system would be reduced, occupation in the factory would be limited, and a non-destructive mounting means would be realized in mounting sensors onto the machine to be detected. Thereupon, health status information of the machine can be obtained in a more non-destructive and convenient manner.

In this disclosure, the portable machine health monitoring system, applied for diagnosing a machine in operation, includes an installation device and a portable monitoring box. The installation device includes a plurality of sensing assemblies and a plurality of connecting assemblies. Each of the plurality of sensing assemblies is connected with the corresponding connecting assembly. Each of the plurality of connecting assemblies mounts the corresponding sensing assembly in a non-destructive manner onto a detected position on the machine. Each of the plurality of sensing assemblies is used for detecting a motion signal at the corresponding detected position on the machine in operation. The portable monitoring box, connected with the installation device, includes an analysis module for receiving the motion signal and further for calculating a health status information according to the detected motion signal.

In one embodiment of this disclosure, the connecting assembly includes a magnetic member connected with the sensing assembly, and the magnetic member attaches the machine to connect the sensing assembly to the detected position on the machine.

In one embodiment of this disclosure, the connecting assembly includes an adhering member connected with the sensing assembly, and the adhering member attaches the machine to connect the sensing assembly to the detected position on the machine.

In one embodiment of this disclosure, the connecting assembly includes a wire-binding member furnished to the sensing assembly, and the sensing assembly is fixed by the wire-binding member to connect the detected position on the machine.

In one embodiment of this disclosure, the motion signal detected by the sensing assembly is a saw-band rotational-speed signal, the detected position is a transmission-member position, the sensing assembly includes an optoelectronic sensor, a first reflecting plate and a second reflecting plate, the connecting assembly fixes the first reflecting plate, the second reflecting plate and the optoelectronic sensor to a first position, a second position and a third position of the transmission member on the machine, respectively, the first position and the second position are diagonally arranged, and the third position is located above the first position or the second position so as to have the optoelectronic sensor to face the first reflecting plate or the second reflecting plate, respectively.

In one embodiment of this disclosure, the connecting assembly includes a frame structure and a plurality of fixing members, the first reflecting plate is fixed to the first position of the transmission member on the machine by the corresponding fixing member, the second reflecting plate is fixed to the second position of the transmission member on the machine by the corresponding fixing member, the frame structure has a first end connected with the optoelectronic sensor and a second end connected with the corresponding fixing members, and the second end of the frame structure is fixed to the machine by closing to the transmission member via the corresponding fixing member, such that the optoelectronic sensor at the first end of the frame structure faces one of the first reflecting plate and the second reflecting plate.

In one embodiment of this disclosure, the frame structure includes a base, a first frame and a second frame, the base is disposed at the second end of the frame structure, the second frame is disposed at the first end of the frame structure, the first frame is connected between the base and the second frame, an installation height is defined between the second frame and the base, and the second frame is located higher than the transmission member.

In one embodiment of this disclosure, the frame structure further includes a third frame furnished with a bending portion, the bending portion of the third frame is fixed to the second frame, the third frame is movably connected with the first frame, and the installation height is adjusted by displacing the third frame along the first frame.

In one embodiment of this disclosure, the first frame includes a plurality of holes and a plurality of locking members, the third frame includes a positioning slot, and each of the plurality of locking members penetrates through the positioning slot and is then fixed to the corresponding hole so to adjust a position of the third frame with respect to the first frame.

In one embodiment of this disclosure, the motion signal detected by the sensing assembly is a vibration signal detected while the portable machine health monitoring system is detecting a band sawing machine, the detected position is a fixed saw-arm guide-seat position, the sensing assembly is an accelerometer, the connecting assembly includes a locking member and a fixing member, the locking member penetrates through the fixing member to fix the fixing member to the accelerometer, and then the fixing member fixes the accelerometer to a fixed tungsten-steel side of the fixed saw-arm guide-seat position on the machine.

In one embodiment of this disclosure, the motion signal detected by the sensing assembly is a saw-band tension signal, the detected position is a tension slideboard position on the machine, the sensing assembly is a proximity switch, the connecting assembly includes a proximity-switch sensing plate and a fixing member, the proximity switch is fixed to the proximity-switch sensing plate, and the fixing member fixes the proximity-switch sensing plate to the tension slideboard position.

In one embodiment of this disclosure, the motion signal detected by the corresponding sensing assembly is a material contact signal, the detected position is a quick-descent mechanism position on the machine, the sensing assembly is a proximity switch, the connecting assembly includes a proximity-switch sensing plate and a fixing member, the fixing member is fixed to the proximity-switch sensing plate, and the fixing member fixes the proximity switch above the quick-decent mechanism position.

In one embodiment of this disclosure, the motion signal detected by the corresponding sensing assembly is a saw-bow speed signal, the detected position is a set of a motionless-part position and a motion-part position on the machine, the sensing assembly includes a resistance ruler and a pull-wire base connected with the resistance ruler, the connecting assembly includes a resistance-ruler supportive frame and a plurality of fixing members, the resistance ruler is fixed to the resistance-ruler supportive frame, and the plurality of fixing members fix the resistance-ruler supportive frame and the pull-wire base to the motionless-part position and the motion-part position, respectively.

In one embodiment of this disclosure, the motion signal detected by the corresponding sensing assembly is a material dimension signal, the detected position is a vice position on the machine, the corresponding sensing assembly is a laser rangefinder, the connecting assembly includes a fixing member that fixes the laser rangefinder to the vice position.

In one embodiment of this disclosure, the connecting assembly includes an angle-adjusting plate and a laser-mounting bracket, a side of the laser-mounting bracket is fixed to the fixing member, a lateral side of the laser-mounting bracket is connected with the angle-adjusting plate, the angle-adjusting plate includes an arc hole and a center hole, a first fixing part of the laser rangefinder is connected pivotally to the center hole, a second fixing part of the laser rangefinder penetrates movably through the arc hole, and the laser rangefinder is to rotate about the center hole while the second fixing part slides along the arc hole.

In one embodiment of this disclosure, the portable monitoring box includes a display screen and a protective member, the analysis module is connected with the display screen, the display screen is used for displaying the health status information, and the protective member shields and thus protect the display screen.

In one embodiment of this disclosure, the portable machine health monitoring system further includes a cloud processing device coupled signally with the portable monitoring box, wherein the analysis module is used to transmit the health status information to the cloud processing device.

As stated above, by providing the portable machine health monitoring system of this disclosure, the sensing assemblies can transmit various motion signals at different detected positions to the analysis module. Based on these motion signals, the analysis module can calculate the health status information of the machine. In other words, unlike the conventional practice that the service stuff in the production line judges the health status of the machine only according to his/her own experience, the embodiment of this disclosure evaluates these motion signals to determine objectively and precisely the practical health status of the saw band.

Further, according to this disclosure, since the connecting assemblies of the installation device are mounted to the detected positions on the machine in a non-destructive way, thus no additional tool is required anymore to damage the machine by drilling holes for mounting the sensing assemblies, obviously by which excessive labor or time for connecting the sensing assembly would be inevitable.

In addition, this embodiment applies the portable monitoring box for containing the portable machine health monitoring system, and thus portability and compactness can be obtained. Thereby, the portable machine health monitoring system can be easily moved close to the machine in any factory, such that time for relocating the portable machine health monitoring system can be saved and the occupied space would be reduced to a minimum.

Further scope of applicability of the present application will become more apparent from the detailed description given hereinafter. However, it should be understood that the detailed description and specific examples, while indicating exemplary embodiments of the disclosure, are given by way of illustration only, since various changes and modifications within the spirit and scope of the disclosure will become apparent to those skilled in the art from this detailed description.

### BRIEF DESCRIPTION OF THE DRAWINGS

The present disclosure will become more fully understood from the detailed description given herein below and the accompanying drawings which are given by way of illustration only, and thus are not limitative of the present disclosure and wherein:
FIG.1 is a schematic view of an embodiment of the portable machine health monitoring system in accordance with this disclosure;
FIG.2 is a schematic view showing different detected positions on a machine in accordance with this disclosure;
FIG.3 is a schematic perspective view of the portable monitoring box in accordance with this disclosure;
FIG.4 is a schematic perspective view of FIG.3 in another angle in accordance with this disclosure;
FIG.5 is a schematic perspective view of an embodiment of the detected positions on the machine in accordance with this disclosure;
FIG.6 is a schematic perspective view of a sensing assembly and a corresponding connecting assembly for detecting rotational speeds of a saw band in accordance with this disclosure;
FIG.7 is a schematic view of an embodiment of the detected position on the machine in accordance with this disclosure;
FIG.8 is a schematic perspective view of a sensing assembly and a connecting assembly for detecting vibration signals in accordance with this disclosure;
FIG.9 is a schematic exploded view of FIG.8;
FIG.10 is a schematic view of another embodiment of the detected position on the machine in accordance with this disclosure;
FIG. 11 is a schematic perspective view of an embodiment of the sensing assembly and the connecting assembly for detecting saw-band tension signals in accordance with this disclosure;
FIG. 12 is a schematic exploded view of FIG.11;
FIG.13 is a schematic perspective view of a further embodiment of the detected position on the machine in accordance with this disclosure;
FIG. 14 is a schematic perspective view of one more embodiment of the detected position on the machine in accordance with this disclosure;
FIG.15 is a schematic perspective view of the sensing assembly and the connecting assembly for detecting saw-bow speed signals in accordance with this disclosure;
FIG.16 is a schematic view of a specific embodiment of the detected position on the machine in accordance with this disclosure;
FIG.17 is a schematic perspective view of the sensing assembly and the connecting assembly for detecting material signals in accordance with this disclosure;
FIG.18 is a schematic perspective view of the connecting assembly of FIG.17; and
FIG.19 is a schematic view of another embodiment of the portable machine health monitoring system in accordance with this disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

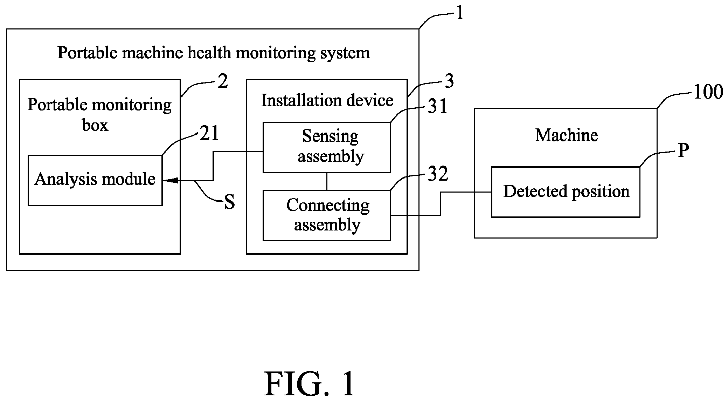

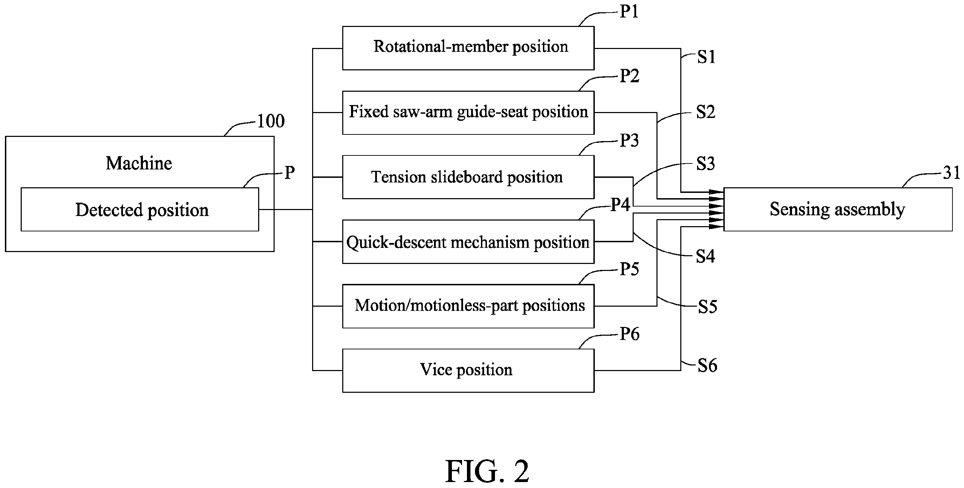

Refer to FIG.1 and FIG.2; where FIG.1 is a schematic view of an embodiment of the portable machine health monitoring system in accordance with this disclosure, and FIG.2 is a schematic view showing different detected positions on a machine in accordance with this disclosure. In this embodiment, the portable machine health monitoring system 1 can be used for detecting various signals generated by a machine 100 in operation, and these signals are further used for diagnosing a health status of the machine 100. The machine 100 can be, but not limited to, a vertical band sawing machine for cutting metals or wood, a horizontal band sawing machine, an automatic NC (Numerical control) band sawing machine, and the like machining tool. In accordance with this disclosure, the practice of the portable machine health monitoring system 1 can be also used for any ordinary machining tool.

In this embodiment, the portable machine health monitoring system 1 includes a portable monitoring box 2 and an installation device 3. The portable monitoring box 2, connected with the installation device 3, includes an analysis module 21. The installation device 3 includes a plurality of sensing assemblies 31 and a plurality of connecting assemblies 32. Each of the sensing assemblies 31, connected with the corresponding connecting assembly 32, utilizes the same connecting assembly 32 to mount the sensing assembly 31 onto a specific detected position P on the machine 100 in a non-destructive manner. This sensing assembly 31 is used for detecting a motion signal S at the specific detected position P of the machine 100 in operation. In other words, according to different detected positions, motion signals generated by the machine 100 would be different. For example, as shown in FIG.2, the machine 100 can have a transmission-member position P1, a fixed saw-arm guide-seat position P2, a tension slideboard position P3, a quick-descent mechanism position P4, motion/motionless-part positions P5, a vice position P6 and the other detected positions. The sensing assemblies 31 are applied individually to perform respective detection at the transmission-member position P1, the fixed saw-arm guide-seat position P2, the tension slideboard position P3, the quick-descent mechanism position P4, the motion/motionless-part positions P5 and the vice position P6 for obtaining a saw-band rotational-speed signal S1, a saw-band vibration signal S2, a saw-band tension signal S3, a material contact signal S4, a saw-bow speed signal S5 and a material dimension signal S6, respectively. However, it shall be understood that the aforesaid embodying is simply particular one of many exemplary examples. According to this disclosure, determination of the detected positions is up to the machine 100 and practical requirements.

Under such an arrangement, the sensing assemblies 31 of this embodiment would transmit the motion signals S at the corresponding detected positions P to the analysis module 21. Then, the analysis module 21 would evaluate the received motion signals S to calculate one corresponding health status information, and thereupon to judge whether or not the machine 100 needs to be repaired or adjusted. Thus, unlike the conventional practice that the service stuff in the production line judges the health status of the machine only according to his/her own experience, the embodiment of this disclosure evaluates these motion signals to determine objectively and precisely the practical health status of the saw band. For example, in this embodiment, based on the health status records, a more appropriate saw band for the instant machining upon a specific material can be determined; based on the adjusted machining process respective to the choice of the saw band, the manufacturing scheme can be altered so as to raise the utilization rate; based on the energy consumption, the inventory of the saw bands can be better controlled so that the purchase expense can be reduced; and, based on the historical health record of the machine, the maintenance and service visits can be optimally arranged.

Further, according to this embodiment, since the connecting assemblies 32 of the installation device 3 are mounted to the detected positions P on the machine in a non-destructive way, thus no additional tool is required to damage the machine 100 by drilling holes for mounting the sensing assemblies 31, obviously by which excessive labor or time for connecting the sensing assembly 31 would be inevitable.

In this embodiment, the connecting assembly 32 includes a magnetic member such as a magnet, an electromagnet, an induction magnet or any magnetic material the like. The sensing assembly 31, connected with the magnetic member, utilizes the magnetic member to attach the machine 100 at the detected position P of the machine 100. In other words, with the magnetic member to magnetically attach the magnetic-attracted machine 100 in a non-destructive manner, the sensing assembly 31 can be thus mounted to the detected position P on the machine 100. In another embodiment, the connecting assembly 32 includes an adhering member having its own stickiness for attaching any arbitrary structure of the machine such as a foam. The adhering member is connected with the sensing assembly 31 at one end thereof, and is adhered to the machine 100 on the other hand, such that the sensing assembly 31 can be firmly adhered to the detected position P of the machine 100. In some other embodiments of this disclosure, the connecting assembly 32 can include a wire-binding member furnished to the sensing assembly 31, such that the sensing assembly 31 be fixed by the wire-binding member. Namely, the sensing assembly 31 can be firmly fixed to the detected position P of the machine 100 via the wire-binding member.

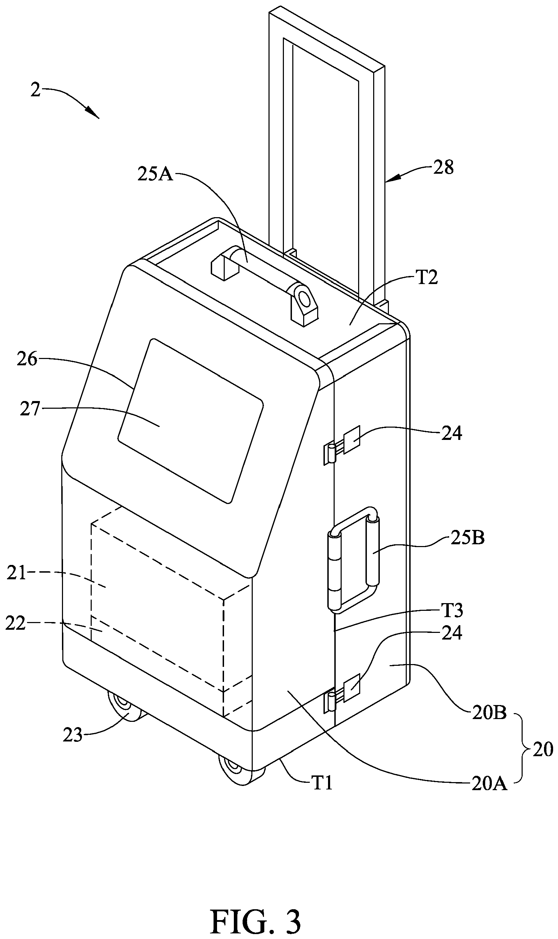

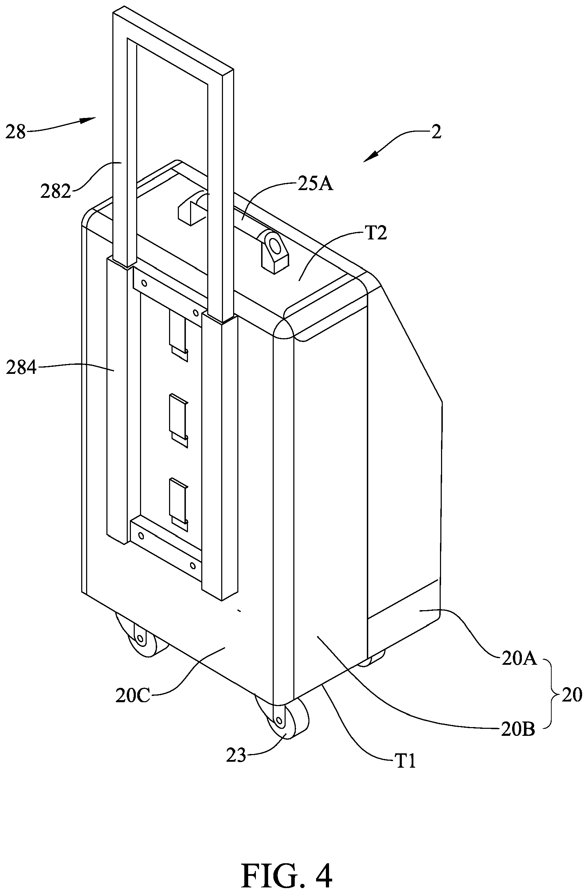

In addition, this embodiment applies a portable monitoring box 2 for containing the portable machine health monitoring system 1, and thus portability and compactness can be obtained. Thereby, the portable machine health monitoring system 1 can be easily moved close to the machine 100 in any factory, such that time for relocating the portable machine health monitoring system 1 can be saved and the occupied space would be reduced to a minimum. The embodiment of the portable monitoring box 2 can be referred to FIG.3 and FIG.4.

Refer to FIG.3 and FIG.4; where FIG.3 is a schematic perspective view of the portable monitoring box in accordance with this disclosure, and FIG.4 is a schematic perspective view of FIG.3 in another angle in accordance with this disclosure. It shall be explained that FIG.3 presents a front side of the portable monitoring box 2, while FIG.4 demonstrates a back shell of the portable monitoring box 2. As shown, the portable monitoring box 2 includes a housing 20 and motion members 23. The analysis module 21 is disposed inside the housing 20, and the motion member 23 is disposed at a bottom portion T1 of the housing 20. Since the motion member 23 is used for displacing the housing 20 embodied herein as a luggage with limited size and weight, thus the analysis module 21 inside the housing 20 can be easily moved to any arbitrary place.

In one embodiment, the portable monitoring box 2 further includes a buffer member 22 disposed inside the housing 20, and the analysis module 21 is mounted on the buffer member 22. While the portable monitoring box 2 is moved, the buffer member 22 can prevent the analysis module 21 mounted thereon from being damaged or degraded by the shaking of the portable monitoring box 2 in motion. In an embodiment not shown herein, beside the analysis module 21 and the buffer member 22, the housing 20 can be also used for containing other parts such as the wiring.

In one embodiment, the portable monitoring box 2 further includes a lock member 24, the housing 20 includes a first shell 20A and a second shell 20B, and the lock member 24 can be furnished between the first shell 20A and the second shell 20B, such that the lock member 24 can fix the first shell 20A and the second shell 20B together.

In one embodiment, the portable monitoring box 2 further includes handle portions 25A, 25B, disposed at relevant places on the housing 20. As shown in FIG.3, the handle portion 25A is connected with a top portion T2 of the housing 20, while the handle portion 25B is connected with a lateral-side portion T3 of the housing 20. Thereupon, beside the motion members 23 can be used for displacing the portable monitoring box 2, each of the handle portions 25A, 25B can be used for carrying or moving the portable monitoring box 2.

In one embodiment, the portable monitoring box 2 further includes a display screen 26 connected with the analysis module 21. After the analysis module 21 evaluates the motion signals S so as to obtain corresponding health status information, then the health status information would be displayed on the display screen 26, so that the health status of the machine 100 can be directly understood via the display screen 26. In addition, the display screen 26 can be a touch screen for an operator easy to place an instruction or switch pages directly. Further, the portable monitoring box 2 further includes a protective member 27 to cover and also protect the display screen 26.

In one embodiment, the portable monitoring box 2 further includes a telescopic handle 28 furnished to the back shell 20C of the housing 20. Practically, the telescopic handle 28 includes a handle frame 282 and a nest portion 284, in which the handle frame 282 shaped as a " 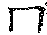 " can be retrieved into the nest portion 284, and the position of the handle frame 282 is locked by a fixing member (not shown in the figure). The telescopic handle 28 can pair the motion member 23 to displace the portable monitoring box 2.

As shown in FIG.1 and FIG.2, in the following embodiment, the motion signal detected by the sensing assembly 31 is defined as the saw-band rotational-speed signal S1, and the detected position P on the machine 100 is defined as the transmission-member position P1. In the following description, installation of the installation device 3 at the transmission-member position P1 would be elucidated as follows with associated figures.

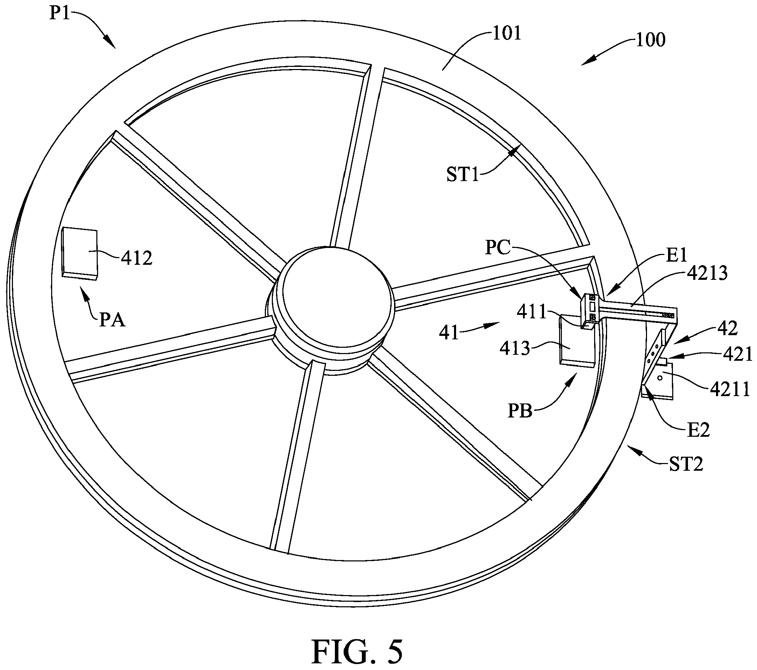

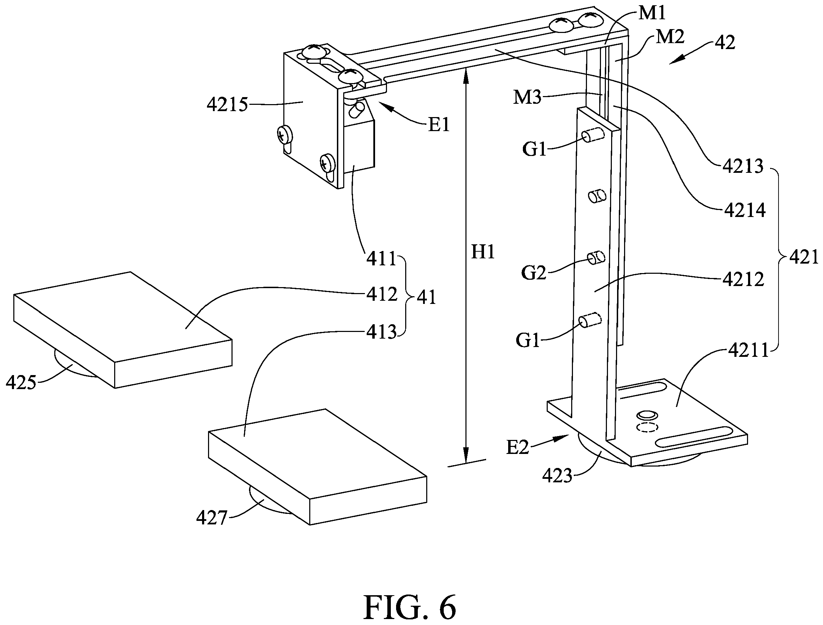

Refer to FIG.5 and FIG.6; where FIG.5 is a schematic perspective view of an embodiment of the detected positions on the machine in accordance with this disclosure, and FIG.6 is a schematic perspective view of a sensing assembly and a corresponding connecting assembly for detecting rotational speeds of a saw band in accordance with this disclosure. In FIG.5, a transmission member 101 at the transmission-member position P1 can be a driven wheel. In some other embodiments, the transmission member 101 can be also a driving wheel. In this embodiment, the sensing assembly 41, as a photovoltaic measurement module, includes an optoelectronic sensor 411, a first reflecting plate 412 and a second reflecting plate 413. By providing the connecting assembly 42, the first reflecting plate 412, the second reflecting plate 413 and the optoelectronic sensor 411 are disposed at a first position PA, a second position PB and a third position PC, respectively, at the transmission member 101 of the machine 100. In particular, the first position PA and the second position PB are diagonally arranged, while the third position PC is located above the first position PA or the second position PB, such that the optoelectronic sensor 411 can be located in correspondence with the first reflecting plate 412 or the second reflecting plate 413.

For example, an inner surface ST1 of the transmission member 101 is furnished with the first position PA and the second position PB diagonally arranged with respect to the first position PA. In other words, the first reflecting plate 412 and the diagonal-arranged second reflecting plate 413 are located at different positions inner to the inner surface ST1 of the transmission member 101, and the third position PC is located above the second position PB. Namely, the optoelectronic sensor 411 is disposed above the inner surface ST1 of the transmission member 101, in correspondence with the second reflecting plate 413. Upon such an arrangement, the first reflecting plate 412 and the second reflecting plate 413 are integrated to establish photoconduction for triggering the optoelectronic sensor 411. Through the rotation of the transmission member 101, a frequency of the photoconduction can be used to calculate the saw-band speed. Namely, the sensing assembly 41 can perform as a photovoltaic measurement module for obtaining the saw-band rotational-speed signal S1.

In this embodiment, as shown in FIG.5 and FIG.6, the connecting assembly 42 includes a frame structure 421 and a plurality of fixing members 423, 425, 427. The first reflecting plate 412 is fixed to the first position PA at the transmission member 101 of the machine 100 by the fixing member 425. The second reflecting plate 413 is fixed to the second position PB at the transmission member 101 of the machine 100 by the fixing member 427. The frame structure 421 has a first end E1 and a second end E2 opposing the first end E1. The first end E1 of the frame structure 421 is connected with the optoelectronic sensor 411, while the second end E2 of the frame structure 421 is connected with the fixing member 423. The second end E2 of the frame structure 421 is fixed to the machine 100 by the fixing member 423, and by closing to the transmission member 101. As shown in FIG.5, the second end E2 of the frame structure 421 is located close to the outer surface ST2 of the transmission member 101, and the frame structure 421 extends inward further over the transmission member 101 to have the first end E1 thereof located close to the inner surface ST1 by having the optoelectronic sensor 411 at the first end E1 of the frame structure 421 to face either the second reflecting plate 413 or the first reflecting plate 412. It shall be explained that, in this embodiment, the fixing members 425, 427, 423 are all embodied as magnetic members fixed or locking to the corresponding first reflecting plate 412, second reflecting plate 413 and the second end E2 of the frame structure 421. With these magnetic members 425, 427, 423 the first reflecting plate 412, the second reflecting plate 413 and the second end E2 of the frame structure 421 can be adhered onto the machine 100, so that the first reflecting plate 412, the second reflecting plate 413 and the second end E2 of the frame structure 421 can be disposed to the corresponding positions on the machine 100. However, this disclosure is not limited to the aforesaid embodiment. In some other embodiments, the fixing members 423, 425, 427 can be adhering members.

In detail, the frame structure 421, defined between the first end E1 and the second end E2, includes a base 4211, a first frame 4212 and a second frame 4213. The base 4211 is located at the second end E2 of the frame structure 421. The fixing member 423 is used for connecting a bottom of the base 4211. The first frame 4212 is located between the base 4211 and the second frame 4213. The second frame 4213 is located between the first end E1 and the first frame 4212. An installation height H1 is defined to the height from the second frame 4213 to the base 4211. As shown in FIG.5, the second frame 4213 is located above the transmission member 101, and a length of the second frame 4213 is larger than a width of the transmission member 101, such that the second frame 4213 can extend across the transmission member 101.

In this embodiment, the frame structure 421 further includes a third frame 4214 having a bending portion M1 and a sliding portion M2, in which an angle is formed between the bending portion M1 and the sliding portion M2. The bending portion M1 of third frame 4214 is fixedly connected with the second frame 4213. The third frame 4214 is movably connected with the first frame 4212. With the third frame 4214 to displace along the first frame 4212, the installation height H1 can be adjusted. According to this disclosure, the mechanism for the third frame 4214 to displace along the first frame 4212 can be, but not limited to, a sliding slot pair or a sliding rack pair. As shown in FIG.6, the first frame 4212 includes a plurality of locking members G1 and a plurality of holes G2, and the sliding portion M2 of the third frame 4214 includes a positioning slot M3. With each of the locking members G1 to penetrate through the positioning slot M3, the position of the third frame 4214 with respect to the first frame 4212 can be adjusted by pairing specifically the locking members G1 to the respective holes G2. In addition, in another embodiment of this disclosure not shown here, the first frame 4212, the second frame 4213 and the third frame 4214 can be integrally designed to meet practical requirements for adjusting the frame structure 421.

In addition, the frame structure 421 further includes a mounting plate 4215 connected with the optoelectronic sensor 411. With one side of the mounting plate 4215 fixed to the second frame 4213, the relative position of the mounting plate 4215 with respect to the second frame 4213 can be used for adjusting the position of the optoelectronic sensor 411.

Referring back to FIG.1 and FIG.2, in the following embodiment, the motion signal detected by the sensing assembly 31 is defined as the saw-band vibration signal S2, and the detected position P on the machine 100 is defined as the fixed saw-arm guide-seat position P2. In the following description, installation of the installation device 3 at the fixed saw-arm guide-seat position P2 would be elucidated as follows with associated figures.

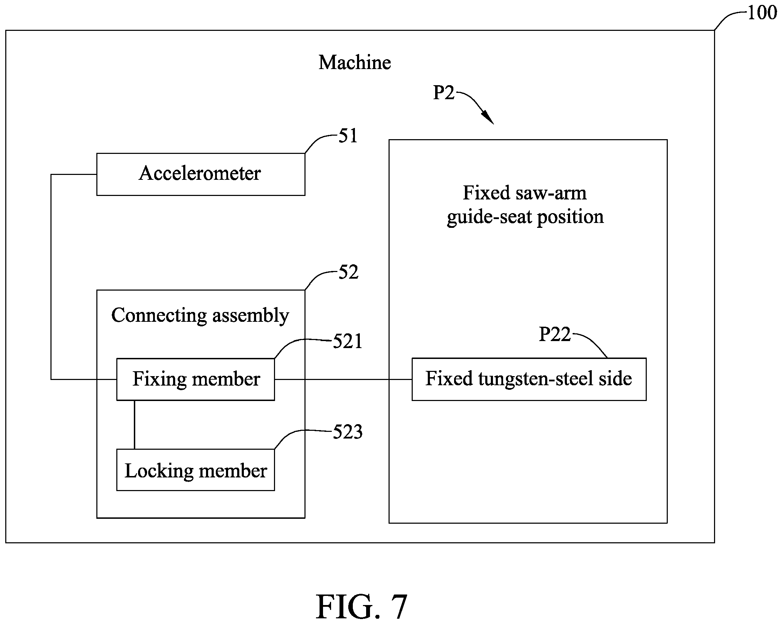

Referring to FIG.7, a schematic view of an embodiment of the detected position on the machine in accordance with this disclosure is shown. The sensing assembly is an accelerometer 51, i.e., one of vibration-detecting modules. The connecting assembly 52 includes a fixing member 521 and a locking member 523. The locking member 523 is used to connect the fixing member 521 with the accelerometer 51, and then the fixing member 521 can be further used to fix the accelerometer 51 to a fixed tungsten-steel side P22 of the fixed saw-arm guide-seat position P2 on the machine 100. Thereupon, with the accelerometer 51 to capture an abrasive frequency generated in machining, a corresponding vibration signal can be obtained for judging a service life of the saw band.

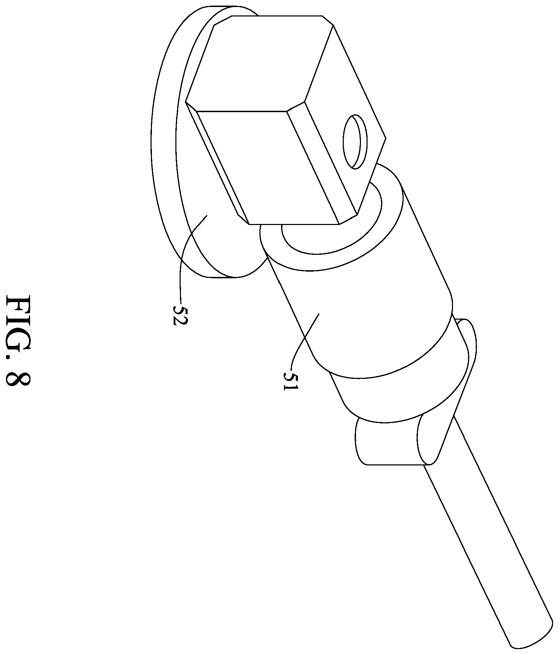

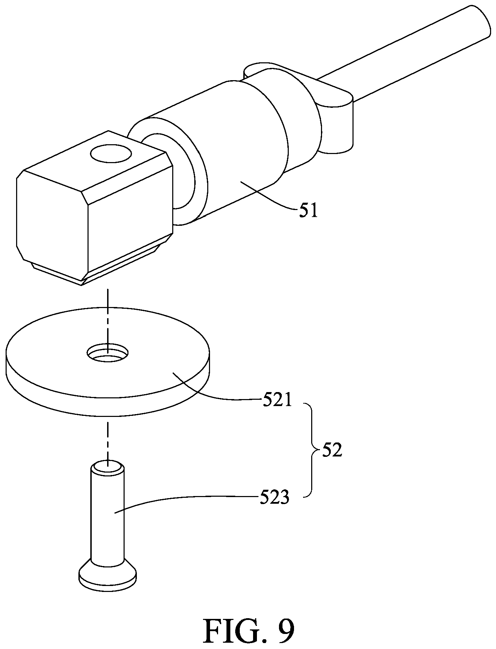

Referring to FIG.8 and FIG.9; where FIG.8 is a schematic perspective view of a sensing assembly and a connecting assembly for detecting vibration signals in accordance with this disclosure, and FIG.9 is a schematic exploded view of FIG.8. In this exemplary example, the accelerometer 51 and the connecting assembly 52 are shown in FIG.8 and FIG.9. The locking member 523 penetrates through the fixing member 521 so as to fix the fixing member 521 to the accelerometer 51, and then the fixing member 521 can fix the accelerometer 51 to the fixed tungsten-steel side P22 of the fixed saw-arm guide-seat position P2 on the machine 100, as shown in FIG.7. It shall be explained that, in this example, the fixing member 521 can be, but not limited to, a magnetic member. With this magnetic member to adhere the accelerometer 51 to the fixed tungsten-steel side P22 of the fixed saw-arm guide-seat position P2. In some other examples, the fixing member 521 can be an adhering member or a wire-binding member.

Referring back to FIG.1 and FIG.2, in the following embodiment, the motion signal detected by the sensing assembly 31 is defined as the saw-band tension signal S3, and the detected position P on the machine 100 is defined as the tension slideboard position P3. In the following description, installation of the installation device 3 at the tension slideboard position P3 would be elucidated as follows with associated figures.

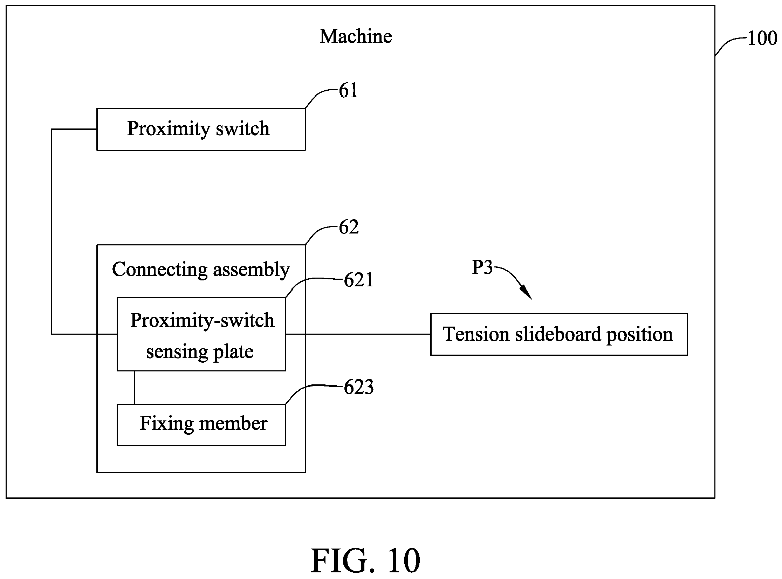

Referring to FIG.10, a schematic view of another embodiment of the detected position on the machine in accordance with this disclosure is shown. The sensing assembly is embodied as a proximity switch 61, i.e., one of proximity switch modules. The connecting assembly 62 includes a proximity-switch sensing plate 621 and a fixing member 623. The proximity switch 61 is mounted on the proximity-switch sensing plate 621, and the proximity-switch sensing plate 621 is further fixed to the fixing member 623. With the fixing member 623, the proximity switch 61 can be disposed onto the tension slideboard position P3. Thereupon, while the tension of the saw band becomes loose, the tension seat would be displaced. At this time, the proximity switch 61 would be triggered to capture the instant saw-band tension signal S3, so that the timing for replacing the loose saw band can be fully understood.

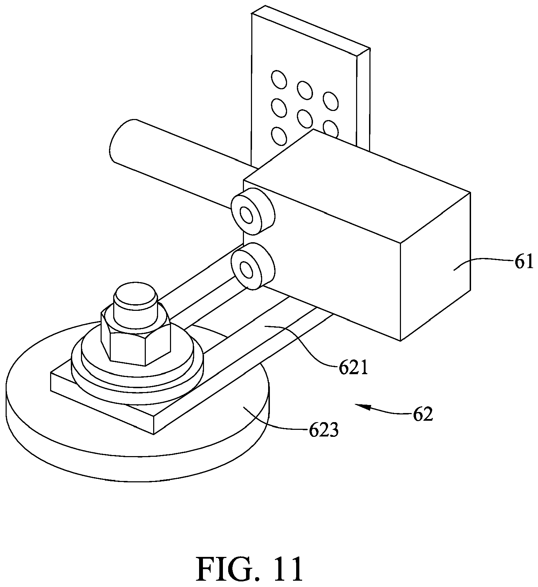

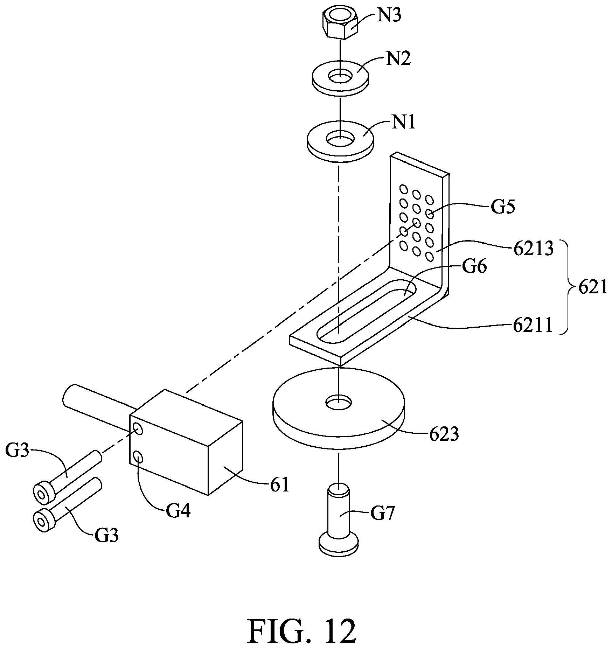

Refer to FIG. 11 and FIG.12; where FIG. 11 is a schematic perspective view of an embodiment of the sensing assembly and the connecting assembly for detecting saw-band tension signals in accordance with this disclosure, and FIG.12 is a schematic exploded view of FIG.11. In this exemplary example, the proximity switch 61 and the connecting assembly 62 are shown in FIG. 11 and FIG.12. The proximity switch 61 is fixed to the proximity-switch sensing plate 621, and the fixing member 623 is used to fix the proximity-switch sensing plate 621. With the fixing member 623, the proximity switch 61 can be fixed to the tension slideboard position P3 as shown in FIG.10. It shall be explained that, in this example, the fixing member 623 can be, but not limited to, a magnetic member. With this magnetic member (i.e., the fixing member 623 of this embodiment) to attach the tension slideboard position P3, the proximity switch 61 can then be mounted to the tension slideboard position P3. In some other embodiments, the fixing member 623 can be an adhering member or a wire-binding member.

In detail, the proximity-switch sensing plate 621 includes a first connecting section 6211 and a second connecting section 6213 connected perpendicularly with the first connecting section 6211. The first connecting section 6211 includes a receiving hole G6, and the second connecting section 6213 includes a plurality of holes G5. By having the locking members G3 to orderly penetrate through the corresponding holes G4 of the proximity switch 61 and then the specific holes G5 of the second connecting section 6213, the proximity switch 61 can be thus mounted fixedly to the proximity-switch sensing plate 621. On the other hand, in this example, by introducing the locking member G7 to penetrate orderly through the fixing member 623, the receiving hole G6 of the first connecting section 6211, the washers N1, N2, and finally the screw nut N3, then the fixing member 623 can be fixed with the proximity-switch sensing plate 621. According to practical requirements, the position of the fixing member 623 with respect to the proximity-switch sensing plate 621 can be adjusted. In this embodiment, with the holes G5 of the second connecting section 6213 or the receiving hole G6 of the first connecting section 6211, the position of the proximity switch 61 with respect to the proximity-switch sensing plate 621 can be adjusted. Namely, the proximity switch 61 can judge different detected positions to determine relevant distance and angle, so that the proximity switch 61 can capture sufficient data.

Referring back to FIG.1 and FIG.2, in the following embodiment, the motion signal detected by the sensing assembly 31 is defined as the material contact signal S4, and the detected position P on the machine 100 is defined as the quick-descent mechanism position P4. In the following description, installation of the installation device 3 at the quick-descent mechanism position P4 would be elucidated as follows with associated figures.

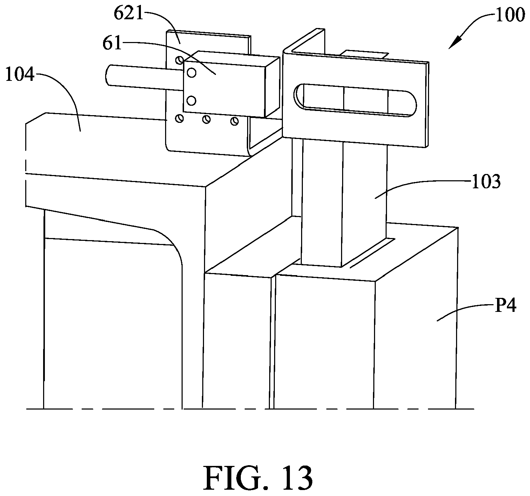

Referring to FIG.13, a schematic perspective view of a further embodiment of the detected position on the machine in accordance with this disclosure is shown. With the sensing assembly to be the proximity switch 61 (referring to FIG. 11 and FIG.12), the connecting assembly 62 includes a proximity-switch sensing plate 621 and a fixing member 623 fixed to the proximity-switch sensing plate 621. With the fixing member 623, the proximity switch 61 can be fixed above the quick-descent mechanism position P4. Similarly, it shall be explained that, in this example, the fixing member 623 is, but not limited to, a magnetic member. With the magnetic member, the proximity switch 61 can be mounted above quick-descent mechanism position P4. In another embodiment, the fixing member 623 can be an adhering member. For example, as shown in FIG.13, the proximity-switch sensing plate 621 is disposed above a fix base 104 of the machine 100, and the installation height of the proximity-switch sensing plate 621 is higher than that of the quick-descent mechanism position P4, in which the fix base 104 can be a specific horizontal portion of a saw bow module. Under such an arrangement, while the machine 100 is in operation, as soon as the quick-descent bar 103 touches the material, the quick-descent bar 103 would be lifted up to trigger the proximity switch 61 to capture and then record the instant material contact signal S4.

Referring back to FIG.1 and FIG.2, in the following embodiment, the motion signal detected by the sensing assembly 31 is defined as the saw-bow speed signal S5, and the detected position P on the machine 100 is defined as the motion/motionless-part positions P5. In the following description, installation of the installation device 3 at the motion/motionless-part positions P5 would be elucidated as follows with associated figures.

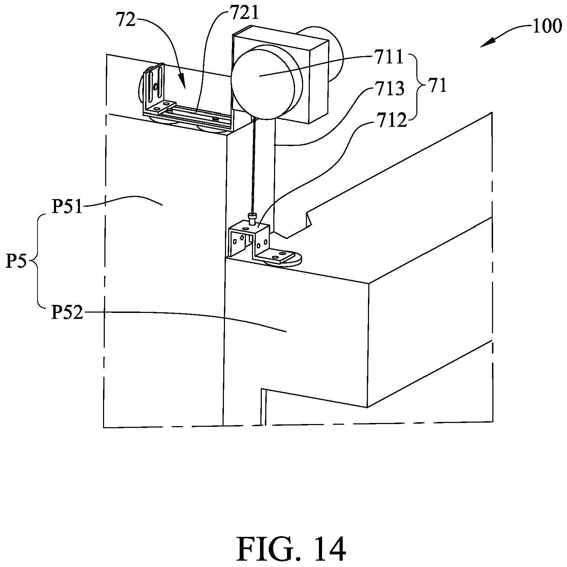

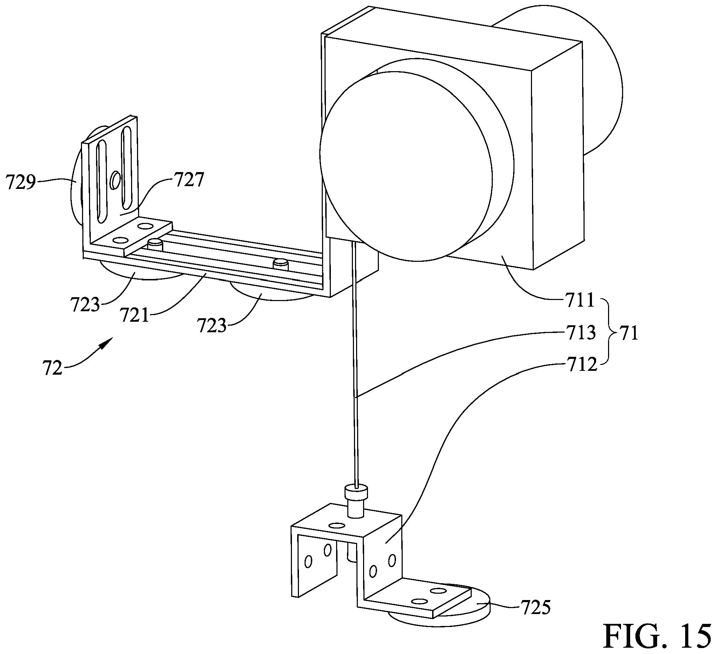

Refer to FIG.14 and FIG.15; where FIG. 14 is a schematic perspective view of one more embodiment of the detected position on the machine in accordance with this disclosure, and FIG.15 is a schematic perspective view of the sensing assembly and the connecting assembly for detecting saw-bow speed signals in accordance with this disclosure. As shown, the detected positions are the motion/motionless-part positions P5 of the machine 100 (including a motion-part position and a motionless-part position). Referring to FIG.14, the motionless part P51 is a vertical column of the machine 100, and the motion part P52 is a saw bow. However, according to this disclosure, the motionless part P51 and the motion part P52 can be embodied as the other pair. The sensing assembly 71 includes a resistance ruler 711 and a pull-wire base 712 connected with the resistance ruler 711, in which a pull wire 713 is furnished between the pull-wire base 712 and the resistance ruler 711; i.e., one of resistance-ruler modules for measuring feed speeds. The connecting assembly 72 includes a resistance-ruler supportive frame 721 and a plurality of fixing members 723, 725. The resistance ruler 711 is fixed to the resistance-ruler supportive frame 721, the fixing member 723 is provided to lock the resistance-ruler supportive frame 721, and the fixing member 725 is fixed with the pull-wire base 712. By providing these fixing members 723, 725, the resistance-ruler supportive frame 721 and the pull-wire base 712 are fixed to respective positions on the motionless part P51 and the motion part P52, respectively.

Thereupon, through the motion part (the saw bow for example) P52 to linearly displace with respect to the motionless part P51, the pull-wire base 712 would displaced as well to generate corresponding variation in resistance, by which the saw-bow speed signal can be derived. In another embodiment not shown in the figure, the pull-wire base 712 is disposed on the motionless part P51, and the resistance-ruler supportive frame 721 and the connected resistance ruler 711 are disposed on the motion part P52. At this time, the motionless part P51 can be the base, and the motion part P52 can be the saw bow.

It shall be explained that, in this embodiment, the fixing members 723, 725 are embodied as magnetic members. By having the magnetic members to attach the motionless part P51 and the motion part P52, the resistance ruler 711 and the pull-wire base 712 can be mounted onto the motion/motionless-part positions P5 on the machine 100, respectively. In some other embodiments, the fixing member 723 or 725 can be an adhering member.

In addition, as shown in FIG.15, according to the positions of the motionless part P51 and the motion part P52, the connecting assembly 72 can further include a connection bracket 727 and a fixing member 729. The connection bracket 727 can be fixed to one end of the resistance-ruler supportive frame 721, and the fixing member 729 can be fixed to the connection bracket 727 by a locking member. Thereupon, the fixing member 729 can be fixed to any arbitrary motion/motionless-part position P5, and thus the fixation of the resistance-ruler supportive frame 721 and the connected resistance ruler 711 onto the corresponding motion/motionless-part positions P5 can be effectively adjusted.

Referring back to FIG.1 and FIG.2, in the following embodiment, the motion signal detected by the sensing assembly 31 is defined as the material dimension signal S6, and the detected position P on the machine 100 is defined as the vice position P6. In the following description, installation of the installation device 3 at the vice position P6 would be elucidated as follows with associated figures.

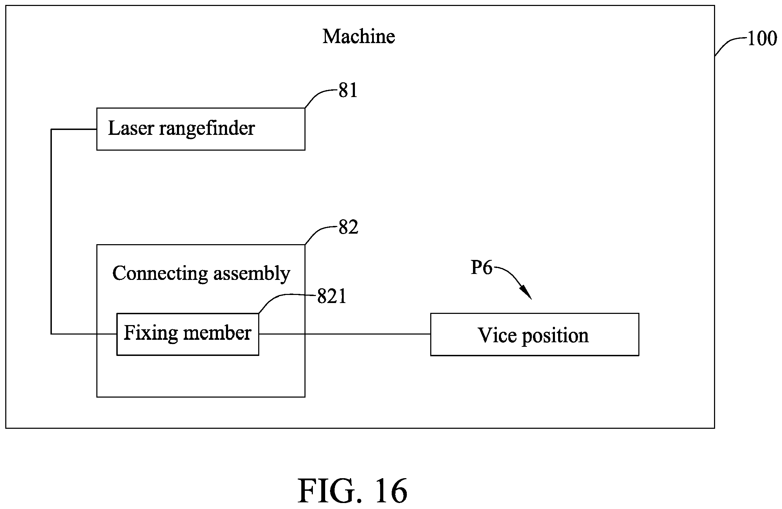

Referring to FIG.16, a schematic view of a specific embodiment of the detected position on the machine in accordance with this disclosure is shown. The detected position is the vice position P6 of the machine 100, and the sensing assembly is a laser rangefinder 81. With the fixing member 821 of the connecting assembly 82, the laser rangefinder 81 can be fixed to the nearby vice position P6. The laser rangefinder 81 is provided to detect a width of the material in a laser examination manner for obtaining the material dimension signal S6, and the position for placing the laser rangefinder 81 can be the upper-wheel motion vice, the oil tank, or any plane on the machine 100.

It shall be explained that, in this embodiment, the fixing member 821 is embodied as a magnetic member. With this magnetic member, the laser rangefinder 81 can be fixed to the nearby vice position P6. In some other embodiments, the fixing member 821 can be an adhering member or a wire-binding member.

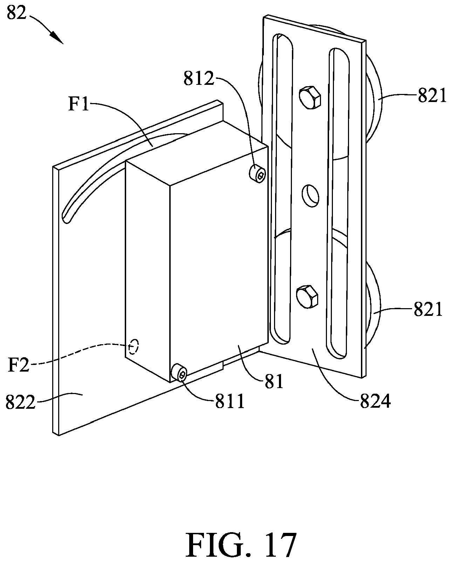

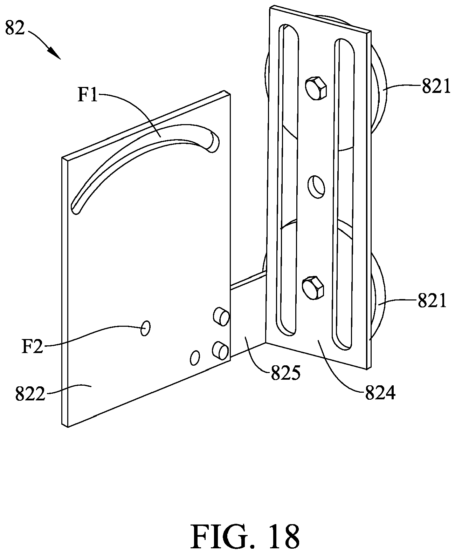

Refer to FIG.17 and FIG.18; where FIG.17 is a schematic perspective view of the sensing assembly and the connecting assembly for detecting material signals in accordance with this disclosure, and FIG.18 is a schematic perspective view of the connecting assembly of FIG.17. In this exemplary example, the laser rangefinder 81 and the connecting assembly 82 are embodied as those shown in FIG.17 and FIG.18. In FIG.17, the connecting assembly 82 further includes an angle-adjusting plate 822 and a laser-mounting bracket 824. A side of the laser-mounting bracket 824 is fixed to the fixing member 821 via any relevant locking means. A lateral side of the laser-mounting bracket 824 is fixed to the angle-adjusting plate 822 via a connection plate 825. The angle-adjusting plate 822 includes an arc hole F1 and a center hole F2. A first fixing part 811 of the laser rangefinder 81 is connected pivotally to the center hole F2, and a second fixing part 812 of the laser rangefinder 81 is to penetrate the arc hole F2 so as to have the second fixing part 812 to slide back and forth along the arc hole F2. Thereupon, with the second fixing part 812 to slide along the arc hole F2, the laser rangefinder 81 can rotate about the center hole F2. By adjusting the position and angling of the laser rangefinder 81, the laser beam and the receiving and reflecting plane of the laser beam can be adjusted to obtain the material dimension signal S6.

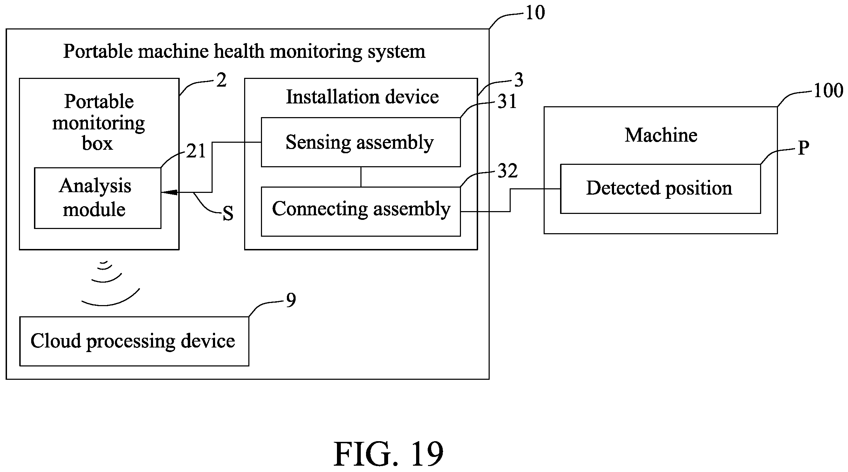

Referring to FIG.19, a schematic view of another embodiment of the portable machine health monitoring system in accordance with this disclosure is shown. It shall be explained that the portable machine health monitoring system 1 of FIG.1 is resembled to the portable machine health monitoring system 10 of FIG.19, and thus the same numbers would be assigned to the parts that present the same functions. In the following description, only the difference between the portable machine health monitoring system 1 of FIG.1 and the portable machine health monitoring system 10 of FIG.19 is elucidated. The major difference between the portable machine health monitoring systems 1 and 10 is that, in the embodiment of FIG.19, the portable machine health monitoring system 10 further includes a cloud processing device 9 coupled signally with the portable monitoring box 2. The analysis module 21 inside the portable monitoring box 2 can be used for transmitting the detected health status information to the cloud processing device 9, such that the health status information of the machine 100 can be collected in a cloud manner.

In summary, by providing the portable machine health monitoring system of this disclosure, the sensing assemblies can transmit various motion signals at different detected positions to the analysis module. Based on these motion signals, the analysis module can calculate the health status information of the machine. In other words, unlike the conventional practice that the service stuff in the production line judges the health status of the machine only according to his/her own experience, the embodiment of this disclosure evaluates these motion signals to determine objectively and precisely the practical health status of the saw band.

Further, according to this disclosure, since the connecting assemblies of the installation device are mounted to the detected positions on the machine in a non-destructive way, thus no additional tool is required anymore to damage the machine by drilling holes for mounting the sensing assemblies, obviously by which excessive labor or time for connecting the sensing assembly would be inevitable.

In addition, this embodiment applies the portable monitoring box for containing the portable machine health monitoring system, and thus portability and compactness can be obtained. Thereby, the portable machine health monitoring system can be easily moved close to the machine in any factory, such that time for relocating the portable machine health monitoring system can be saved and the occupied space would be reduced to a minimum.

Further, the buffer member inside the portable monitoring box can prevent the analysis module mounted thereon from being damaged or degraded by the shaking of the portable monitoring box in motion.

With respect to the above description then, it is to be realized that the optimum dimensional relationships for the parts of the disclosure, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present disclosure.

## Claims

1. A portable machine health monitoring system (1), applied for diagnosing a machine (100) in operation, comprising:
an installation device (3), including a plurality of sensing assemblies (31) and a plurality of connecting assemblies (32), each of the plurality of sensing assemblies (31) being connected with the corresponding connecting assembly (32), each of the plurality of connecting assemblies (32) mounting the corresponding sensing assembly (31) in a non-destructive manner onto a detected position (P) on the machine (100), each of the plurality of sensing assemblies (31) being used for detecting a motion signal (S) at the corresponding detected position (P) on the machine (100) in operation; and
a portable monitoring box (2), connected with the installation device (3), including an analysis module (21) for receiving the motion signal (S) and further for calculating a health status information according to the motion signal (S).

2. The portable machine health monitoring system (1) of claim 1, wherein the connecting assembly (32) includes a magnetic member connected with the sensing assembly (31), and the magnetic member attaches the machine (100) to connect the sensing assembly (31) to the detected position (P) on the machine (100).

3. The portable machine health monitoring system (1) of claim 1, wherein the connecting assembly (32) includes an adhering member connected with the sensing assembly (31), and the adhering member attaches the machine (100) to connect the sensing assembly (31) to the detected position (P) on the machine (100).

4. The portable machine health monitoring system (1) of claim 1, wherein the connecting assembly (32) includes a wire-binding member furnished to the sensing assembly (31), and the sensing assembly (31) is fixed by the wire-binding member to connect the detected position (P) on the machine (100).

5. The portable machine health monitoring system (1) of claim 1, wherein the motion signal (S) detected by the sensing assembly (31) is a saw-band rotational-speed signal (S1), the detected position (P) is a transmission-member position (P1), the sensing assembly (31) includes an optoelectronic sensor (411), a first reflecting plate (412) and a second reflecting plate (413), the connecting assembly (32) fixes the first reflecting plate (412), the second reflecting plate (413) and the optoelectronic sensor (411) to a first position (PA), a second position (PB) and a third position (PC) of a transmission member (101) on the machine (100), respectively, the first position (PA) and the second position (PB) are diagonally arranged, and the third position (PC) is located above the first position (PA) or the second position (PB) so as to have the optoelectronic sensor (411) to face the first reflecting plate (412) or the second reflecting plate (413), respectively.

6. The portable machine health monitoring system (1) of claim 5, wherein the connecting assembly (32) includes a frame structure (421) and a plurality of fixing members (423, 425, 427), the first reflecting plate (412) is fixed to the first position (PA) of the transmission member (101) on the machine (100) by the corresponding fixing member (425), the second reflecting plate (413) is fixed to the second position (PB) of the transmission member (101) on the machine (100) by the corresponding fixing member (427), the frame structure (421) has a first end (E1) connected with the optoelectronic sensor (411) and a second end (E2) connected with the corresponding fixing member (423), and the second end (E2) of the frame structure (421) is fixed to the machine (100) by closing to the transmission member (101) via the corresponding fixing member (423), such that the optoelectronic sensor (411) at the first end (E1) of the frame structure (421) faces one of the first reflecting plate (412) and the second reflecting plate (413).

7. The portable machine health monitoring system (1) of claim 5, wherein the frame structure (421) includes a base (4211), a first frame (4212) and a second frame (4213), the base (4211) is disposed at the second end (E2) of the frame structure (421), the second frame (4213) is disposed at the first end (E1) of the frame structure (421), the first frame (4212) is connected between the base (4211) and the second frame (4213), an installation height (HI) is defined between the second frame (4213) and the base (4211), and the second frame (4213) is located higher than the transmission member (101).

8. The portable machine health monitoring system (1) of claim 7, wherein the frame structure (421) further includes a third frame (4214) furnished with a bending portion (M1), the bending portion (M1) of the third frame (4214) is fixed to the second frame (4213), the third frame (4214) is movably connected with the first frame (4212), and the installation height (HI) is adjusted by displacing the third frame (4214) along the first frame (4212).

9. The portable machine health monitoring system (1) of claim 7, wherein the first frame (4212) includes a plurality of holes (G2) and a plurality of locking members (G1, G3), the third frame (4214) includes a positioning slot (M3), and each of the plurality of locking members (G1, G3) penetrates through the positioning slot (M3) and is then fixed to the corresponding hole (G2) so to adjust a position of the third frame (4214) with respect to the first frame (4212).

10. The portable machine health monitoring system (1) of claim 1, wherein the motion signal (S) detected by the sensing assembly (31) is a vibration signal (S2), the detected position (P) is a fixed saw-arm guide-seat position (P2), the sensing assembly (31) is an accelerometer (51), the connecting assembly (52) includes a locking member (523) and a fixing member (521), the locking member (523) penetrates through the fixing member (521) to fix the fixing member (521) to the accelerometer (51), and then the fixing member (521) fixes the accelerometer (51) to a fixed tungsten-steel side (P22) of the fixed saw-arm guide-seat position (P2) on the machine (100).

11. The portable machine health monitoring system (1) of claim 1, wherein the motion signal (S) detected by the sensing assembly (31) is a saw-band tension signal (S3), the detected position (P) is a tension slideboard position (P3) on the machine (100), the sensing assembly (31) is a proximity switch (61), the connecting assembly (62) includes a proximity-switch sensing plate (621) and a fixing member (623), the proximity switch (61) is fixed to the proximity-switch sensing plate (621), and the fixing member (623) fixes the proximity-switch sensing plate (621) to the tension slideboard position (P3).

12. The portable machine health monitoring system (1) of claim 1, wherein the motion signal (S) detected by the corresponding sensing assembly (31) is a material contact signal (S4), the detected position (P) is a quick-descent mechanism position (P4) on the machine (100), the sensing assembly (31) is a proximity switch (61), the connecting assembly (62) includes a proximity-switch sensing plate (621) and a fixing member (623), the fixing member (623) is fixed to the proximity-switch sensing plate (621), and the fixing member (623) fixes the proximity switch (61) above the quick-decent mechanism position (P4).

13. The portable machine health monitoring system (1) of claim 1, wherein the motion signal (S) detected by the corresponding sensing assembly (31) is a saw-bow speed signal (S5), the detected position (P) is a set of a motionless-part position (P51) and a motion-part position (P52) on the machine (100), the sensing assembly (31) includes a resistance ruler (711) and a pull-wire base (712) connected with the resistance ruler (711), the connecting assembly (72) includes a resistance-ruler supportive frame (721) and a plurality of fixing members (723, 725), the resistance ruler (711) is fixed to the resistance-ruler supportive frame (721), and the plurality of fixing members (723, 725) fixes the resistance-ruler supportive frame (721) and the pull-wire base (712) to the motionless-part position (P51) and the motion-part position (P52), respectively.

14. The portable machine health monitoring system (1) of claim 1, wherein the motion signal (S) detected by the corresponding sensing assembly (31) is a material dimension signal (S6), the detected position (P) is a vice position (P6) on the machine (100), the corresponding sensing assembly (31) is a laser rangefinder (81), the connecting assembly (82) includes a fixing member (821) that fixes the laser rangefinder (81) to the vice position (P6).

15. The portable machine health monitoring system (1) of claim 14, wherein the connecting assembly (82) includes an angle-adjusting plate (822) and a laser-mounting bracket (824), a side of the laser-mounting bracket (824) is fixed to the fixing member (821), a lateral side of the laser-mounting bracket (824) is connected with the angle-adjusting plate (822), the angle-adjusting plate (822) includes an arc hole (F1) and a center hole (F2), a first fixing part (811) of the laser rangefinder (81) is connected pivotally to the center hole (F2), a second fixing part (812) of the laser rangefinder (81) penetrates movably through the arc hole (F1), and the laser rangefinder (81) is to rotate about the center hole (F2) while the second fixing part (812) slides along the arc hole (F2).

16. The portable machine health monitoring system (1) of claim 1, wherein the portable monitoring box (2) includes a display screen (26) and a protective member (27), the analysis module (21) is connected with the display screen (26), the display screen (26) is used for displaying the health status information, and the protective member (27) shields and thus protects the display screen (26).

17. The portable machine health monitoring system (1) of claim 1, further including a cloud processing device (9) coupled signally with the portable monitoring box (2), wherein the analysis module (21) is used to transmit the health status information to the cloud processing device (9).
